# EUROPÄISCHE PATENTSCHRIFT

(11) **EP 2 458 648 B1**
(45) Veröffentlichungstag und Bekanntmachung des Hinweises auf die Patenterteilung: **07.01.2015**
(21) Anmeldenummer: 11190105.4
(22) Anmeldetag: 22.11.2011
(51) Int. Cl.: H01L 31/052

(54) **Hybrid-Kollektor**
Hybrid collector
Collecteur hybride

(30) Priorität: 25.11.2010 DE 102010060812; 14.07.2011 DE 102011051848
(43) Veröffentlichungstag der Anmeldung: 30.05.2012
(73) Patentinhaber: SunSail energy GmbH & Co. KG, 27245 Kirchdorf (DE)
(72) Erfinder: Krampe, Karl-Heinz, 48151 Münster (DE)
(74) Vertreter: Winter, Brandl, Fürniss, Hübner, Röss, Kaiser, Polte - Partnerschaft mbB

(56) Entgegenhaltungen:
- WO-A1-2006/019091
- US-A1- 2008 048 102
- US-A1- 2008 135 090

## Beschreibung

Die Erfindung betrifft einen Hybrid-Kollektor mit einer Absorber-Komponente und einer Dünnschicht-Photovoltaik-Komponente gemäß dem Oberbegriff des Anspruchs 1. Im Dokument WO 2006/019091 A1 wird ein solcher Hybrid-Kollektor beschrieben.

In den letzten Jahren sind erneuerbare Energien immer wichtiger geworden. Dies hängt mit den gestiegenen Energiekosten sowie dem Klimaschutz zusammen. Um einerseits die Umwelt zu schonen und andererseits die Abhängigkeit von fossilen Brennstoffen zu reduzieren, wird die Nachfrage nach erneuerbaren Energien, wozu auch die Solaranlagen zählen, immer größer.

Es sind verschiedene Solaranlagen zur Umwandlung von Sonnenenergie in andere Energieformen bekannt. Beispielsweise ist aus der Offenlegungsschrift DE 10 2008 009 477 A1 ein Dünnschicht-Solarzellenkonzept bekannt, bei dem die Dünnschichten meist direkt auf der Oberseite einer Tragschicht, die gleichzeitig als Absorber fungiert, abgeschieden wird. Bei dieser Anordnung der Dünnschicht auf dem Absorber können sich zwischen der Dünnschicht und dem Absorber Wärmedehnungen aufgrund unterschiedlicher Materialeigenschaften nicht ungehindert ausbreiten, was zu unerwünschten Spannungen zwischen dem Absorber und der empfindlichen Dünnschicht führt.

Ferner ist beispielsweise aus der Offenlegungsschrift DE 10 2005 024 516 A1 eine Solaranlagen bekannt, bei der die Dünnschicht entweder auf ein Flachglas oder auf einer Folie abgeschieden wird, wobei diese stets an beiden Seiten von einer Folie umgeben ist. Dieser Aufbau hat den Nachteil, dass die entstehende Wärme nicht gut abgeführt werden kann, da zwischen dem Absorber, der die Wärme abführen soll, und dem Solarmodul immer eine Folie vorhanden ist und zwischen dem Schutzglas und dem Absorber zusätzlich die Dünnschicht und zwei Folien vorhanden sind, welche die Wärmeleitung zusätzlich behindern. Diese Bauweise führt außerdem zu noch höheren Temperaturdifferenzen zwischen den Schichten Glas, Dünnschicht und Absorber, was wiederum die unterschiedlichen Wärmedehnungen aufgrund unterschiedlicher Wärmeausdehnungskoeffizienten fördert. Als Folge dessen treten wärmeinduzierte Spannungen in den einzelnen Schichten auf. Zusätzlich nachteilig ist die weitere Schutzschicht, die notwendig ist, um das Glas mit der Dünnschicht vor äußeren Einwirkungen zu schützen, wodurch sich Gewicht und Baugröße erhöhen.

Um für den Fall der schlechten Wärmeleitung des Solarmoduls zum Absorber Abhilfe zu schaffen, wird in der DE 10 2006 060 786 A1, die von der oben genannten Anmeldung ausgeht, ein solares Energiegewinnungsmodul und damit ein Hybridkollektor gemäß dem Oberbegriff des Patentanspruchs 1 offenbart, bei dem die Folie zwischen Dünnschicht und Absorber weggelassen wird. Jedoch besteht auch bei dieser Lösung das Problem, dass es im Absorber aufgrund der Wärmedehnungen zu wärmeinduzierten Spannungen kommt und sich folglich der Absorber verbiegt. Außerdem besteht das Problem, dass es aufgrund deutlich unterschiedlicher Wärmeausdehnungskoeffizienten zwischen der Siliziumdünnschicht und dem meist metallischen Absorber zu stark unterschiedlichen Wärmedehnungen kommt, welche die empfindliche Dünnschicht beschädigen können.

Der Erfindung liegt daher die Aufgabe zugrunde, einen Hybrid-Kollektor der eingangs beschriebenen Art mit geringem Aufwand und auf einfache sowie kostengünstige Art und Weise weiterzubilden, dass er sich in besonderer Weise dazu eignet, Spannungen aufgrund unterschiedlicher Wärmedehnungen zwangsweise unterschiedlicher Materialien zu kompensieren und so etwaige Schäden zu vermeiden.

Diese Aufgabe wird hinsichtlich des Hybrid-Kollektors mit einer Absorber-Komponente und einer Dünnschicht-Photovoltaik-Komponente durch die Merkmale des Anspruchs 1 gelöst.

Der erfindungsmäßige Hybrid-Kollektor ist in der Lage, unterschiedliche Materialdehnungen benachbarter Schichten, insbesondere der Dünnschicht und dem vorzugsweise metallischen Absorber, zumindest teilweise zu reduzieren. Die Erfinder haben erkannt, dass es durch ebenso einfache wie kostengünstige Maßnahmen gelingt, an dieser kritischen Grenzschicht, an der die jeweiligen Wärmeausdehnungskoeffizienten stärker voneinander abweichen, als dies bspw. zwischen einer Glasschicht und einer Siliziumdünnschicht der Fall ist, die Spannungen zwischen den jeweiligen Schichten abzubauen.

Dazu wird eine Tragschicht, auf der die Halbleiter-Dünnschicht abgeschieden ist, über diese Dünnschicht mittels einer Zwischenschicht mit dem Absorber zu einer Einheit laminiert.

Wesentlicher Aspekt dabei ist, dass zwischen dem Absorber und der Dünnschicht die Zwischenschicht, insbesondere eine Klebeschicht, vorzugsweise eine Schmelzklebeschicht, eingebracht wird, die vorteilhafter Weise mehrere Aufgaben gleichzeitig übernimmt. So gewährleistet sie sowohl einen nahezu konstanten Abstand über die gesamte Kontaktfläche also auch eine stoffschlüssige Verbindung der beiden Schichten. Ebenso vorteilhaft ist, dass die Schmelzklebeschicht elektrisch isolierende und gleichzeitig thermisch leitende Eigenschaften aufweist, so dass eine ausreichende Durchschlagsicherheit gewährleistet und gleichzeitig die entstehende Wärme über die Schmelzklebeschicht und dem Absorber abgeführt werden kann. Erfindungsgemäß ist die Klebeschicht von einer EVA-Schmelzklebefolie zum Isolieren und zum Ausgleich unterschiedlicher Wärmedehnungen gebildet, und zwar mit einer Dicke, die im Bereich zwischen 0,5mm und 2mm liegt. EVA-Folien haben eine gute elektrische Isolation bei ebenfalls guter Wärmeleitfähigkeit. Beide Eigenschaften sind für Photovoltaikanlagen wichtig, da die Solarzellen zum einen Durchschlagtests von bis zu 1000 Volt standhalten müssen und andererseits eine gute Wärmeleitfähigkeit aufweisen müssen, damit die entstehende Wärme gut über das Absorberblech an das Wärmetauscherrohr abgegeben werden kann.

Von besonderem Vorteil ist, dass die Schmelzklebeschicht die unterschiedliche Längenänderung der Dünnschicht und des Absorbers ausgleichen kann, indem es sich verformt. Somit werden die Scherkräfte, welche infolge unterschiedlicher Wärmedehnungen an der Grenzschicht zwischen der Dünnschicht und dem Absorber entstehen, von der Schmelzklebeschicht absorbiert.

Vorteilhafte Weiterbildungen sind Gegenstand der Unteransprüche.

Vorteilhafter Weise ist die Tragschicht des Hybrid-Kollektors von mehreren Glasplatten gebildet, die in Längsrichtung des Wärmetauscherrohres mit Zwischenabständen voneinander aneinander gereiht sind. Durch die Segmentierung der Tragschicht in mehrere Glasplatten können gezielt Zwischenabstände zwischen diese eingebracht werden.

Vor dem Hintergrund, dass der Längenausdehnungskoeffizient von Glas um ein Vielfaches geringer ist als der eines metallischen Werkstoffes, wie bspw. Aluminium oder Kupfer, können auf diese Weise Hybrid-Kollektoren mit einer Länge von bis zu 2 Metern realisiert werden. Aufgrund der Zwischenabstände kann sich der Absorber quasi ungehindert ausdehnen, ohne dass die Segmente der Tragschicht, auf denen die Dünnschicht abgeschieden ist, einen Schaden davontragen.

Ferner erlaubt diese Bauweise, bei der Wärmedehnungspufferbereiche zwischen den Tragschichtsegmenten eingestellt werden können, eine schmale und in Längsrichtung der Wärmetauscherrohre langgestreckte Anordnung, welche für Solaranlagen besonders vorteilhaft ist.

Zusätzlich werden durch die Segmentierung der Tragschicht deren Herstellungskosten reduziert, da sich sowohl die Herstellung als auch der Transport sowie die Weiterverarbeitung handlicher kleinerer Glasplatten vereinfacht.

Ebenso können im Falle eines Ausfalls von Zellen die betroffenen Segmente der Tragschicht, auf denen sich die defekten Dünnschichtbereiche befinden, selektiv ausgetauscht werden.

Nach einer bevorzugten Weiterbildung hat das Absorberblech einen schmalen Rechteckgrundriss und ist mittels zumindest einer Querausstanzung in Segmente unterteilt. Dadurch kann diese selbst bei fester Einspannung wärmebedingte Spannungen abbauen. Damit werden Verformungen des Absorberblechs und infolgedessen Schäden der empfindlichen Dünnschicht vermieden. Je nach Gesamtlänge und erwarteter Betriebstemperaturen erlaubt die entsprechende Anzahl an Querausstanzungen dem Absorberblech eine ungehinderte Ausdehnung.

Noch stärker wird dieser Effekt bei der Kombination der Querausstanzungen mit der Segmentierung der Tragschicht, wobei deren Anordnung zueinander nicht vorgegeben ist. In diesem Fall kann sich einerseits das Absorberblech in den Bereichen der Ausklinkungen ungehindert ausdehnen, so dass es nicht zu Spannungen folglich zu Verformungen des Absorbers kommt. Zusätzlich dienen die Zwischenabstände der Glasplatten als Sicherheitsabstand für ungleichmäßige wärmebedingte Längenänderungen, die längs der Wärmetauscherrohre auftreten können, da sich das Kühlmedium entlang der Leitung immer weiter erwärmt.

Eine vorteilhafte Weiterbildung, nach der die Ausstanzungen des Absorberblechs zwischen den Glasplatten liegen, ist von besonderer Bedeutung bei Hybrid-Kollektoren, die fest eingespannt sind. Bewirken Temperatureinflüsse, dass sich die Anordnung aufgrund unterschiedlicher Wärmedehnungen verbiegt bzw. diese ausbeult oder gar knickt, so erlaubt die Weiterbildung des Anspruchs 4 in Kombination mit den Queraustanzungen des Anspruchs 3, dass dies nicht an beliebiger Stelle der Anordnung geschieht, sondern gerade an den Ausklinkungen. An diesen als Sollbiegestelle fungierenden Zwischenabständen kann sich demnach das Absorberblech samt Dünnschicht-Tragschicht verbiegen, ohne dass die Glassegmente und damit die Dünnschicht beschädigt werden.

Bei der Anpassung des Hybrid-Kollektors an unterschiedliche Einsatzbedingungen gewinnt die variable Dicke der EVA-Folie an Bedeutung. Je nach auftretenden Spannungen und Temperaturen kann die Dicke der Schmelzklebefolie zwischen Absorber und Dünnschicht variiert werden. Somit kann selbst bei größeren Temperaturschwankungen die Dicke der Folie so gewählt werden, dass sie in der Lage ist, die unterschiedlichen Dehnungen zwischen dem Absorber und der Dünnschicht aufzunehmen.

Besondere Bedeutung hat der hohe elektrische Widerstand von EVA-Folien, der bei >10¹⁴ Ω*cm liegt. Diese Eigenschaft ermöglicht es, die Laminierfolie aus Sicht der Isolation besonders dünn zu gestalten, was wiederum eine bessere Wärmeleitung zur Folge hat. Somit liegt die Dicke im Bereich von 0,5mm und 2mm.

Die üblicherweise verwendeten Folien als Klebeschicht zwischen dem Absorber und der Tragschicht über die Dünnschicht haben eine Wärmeleitfähigkeit im Bereich zwischen 0,2 und 0,32 W/(m*K). Vorteilhaft dabei ist, dass eine Folie mit einer

Wärmeleitfähigkeit von ca. 0,2 W/(m*K) verwendet werden kann. Dieser thermoplastische nicht vernetzende Kunststoff (Polyvinylbutyral) lässt sich wesentlich schneller verarbeiten als beispielsweise eine EVA-Folie, die bei einer 0,7mm Dicke eine Verarbeitungszeit von 12 bis 15 Minuten benötigt. Neben dem Wegfall der Vernetzungszeit ist auch das Ausgasen von Additiven im Vergleich zur EVA-Klebeschicht geringer.

Vor dem Hintergrund der Austauschbarkeit einzelner defekter Bereiche der Solaranlage bietet sich der Thermoplast PVB besonders an, da die Klebung gezielt durch einfaches Aufschmelzen gelöst werden kann. Dadurch kann der defekte Bereich ausgetauscht und anschließend die Verbindung wieder hergestellt werden.

In einer weiteren bevorzugten Weiterbildung des Hybrid-Kollektors gemäß Anspruch 6 kann das Absorberblech einen Rechteckgrundriss mit einer Länge von 1,5 bis 2,5 Metern und einer Breite von 0,1 bis 0,2 Metern aufweisen, wobei auf dem Absorberblech mehrere der Länge nach hintereinander angeordnete Segmente der Tragschicht Platz finden. Besonders gute Ergebnisse konnten mit Abmessungen der Segmente der Tragschicht mit 0,47 Meter Länge und 0,136 Meter Breite erzielt werden. Die Form des Absorberblechs erlaubt kostengünstig eine lange Bauweise, so dass darauf eine Vielzahl von beschichteten Glasstreifen hintereinander aufgebracht werden können. Diese Anordnung ist im Hinblick auf die Einstellung der elektrischen Spannung von wichtiger praktischer Bedeutung.

Grundsätzlich besteht eine Solaranlage aus mindestens zwei Hybrid-Kollektoren, wobei zwei Hybrid-Kollektoren parallel zueinander liegen und zu einem Baugruppen-Modul zusammengefasst sind. Dabei sind die jeweiligen Photovoltaik-Komponenten elektrisch in Reihe und die Wärmetauscherrohre parallel geschaltet. Die Aneinanderreihung der Photovoltaik-Komponenten dient zur einfachen Einstellung der erwünschten Spannung des Moduls, die von der Anzahl der Baugruppen abhängt.

Die erfindungsgemäße Solaranlage kann auch mehreren Baugruppen ausreichend gekühlt, da die Wärmetauscherrohre vorteilhafterweise parallel geschaltet sind. Damit werden alle Glasstreifen gleichmäßig gekühlt, ohne dass den in Fließrichtung hinteren Bereich der Glasstreifen bzw. Solarzellen eine geringere Kühlleistung zur Verfügung steht als den vorderen Bereichen, da das Kühlmedium schon aufgeheizt ist.

Mit einer weiteren vorteilhaften Weiterbildung ist eine Vielzahl an Baugruppen-Module zusammengefasst und sowohl die Wärmetauscherrohre als auch die jeweiligen Baugruppen-Module sind elektrisch parallel geschaltet. In dieser Konstellation der Wärmetauscherrohre werden diese jeweils mit frischem bzw. nicht aufgeheiztem Kühlwasser versorgt. Dadurch werden alle Baugruppen-Module gleichmäßig gekühlt. Das wiederum ermöglicht eine Erweiterung der Solaranlage um eine beliebige Anzahl an Baugruppen-Modulen.

Durch die vorteilhafte Parallelschaltung der Baugruppen-Module wird die Leistung der Anlage variiert. Somit kann eine Solaranlage entsprechend dem Bedarf bzw. den Anforderungen in einfacher Weise durch parallele Erweiterung der Anlage um Baugruppen-Module angepasst werden.

Ein Rahmen, in dem bodenseitig eine Isolierschicht liegt, trägt das Absorberblech. Dadurch tragen die Baugruppen-Module nicht ihr eigenes Gewicht und erleiden auf Dauer Verformungen, sondern werden von der Isolierschicht getragen. Ferner schützt die Isolierschicht die Wärmetauscherrohre vor Erwärmung durch äußere Einflüsse wie beispielsweise Sonneneinstrahlung, wodurch das Temperaturniveau des Kühlmediums niedrig gehalten wird, was wiederum die Kühlleitung für die Solaranlage erhöht. Des Weiteren erhöht die Isolierschicht den Wirkungsgrad der Gesamtanlage, da keine Verlustwärme verloren geht, sondern von den Wärmetauscherrohren zum Aufheizen des Kühlmediums aufgenommen wird.

Nachstehend wird anhand schematischer Zeichnungen ein Ausführungsbeispiel der Erfindung näher erläutert. Es zeigen:
- Fig. 1: eine schematische perspektivische Ansicht einer Solaranlage;
- Fig. 2 und 2A: eine schematische Querschnittsansicht der Solaranlage sowie eine vergrößerte Darstellung einer Detailansicht der einzelnen Schichten eines Hybrid-Kollektors;
- Fig. 3 und 3A: eine schematische perspektivische Rückansicht der Solaranlage sowie eine vergrößerte Darstellung einer Detailansicht einer Querausstanzung;
- Fig. 4 und 5: schematische perspektivische Rückansichten einer modifizierten Ausführungsform der Solaranlage; und
- Fig. 6: in vergrößerter Darstellung einen Schnitt durch den Hybridkollektor in einer modifizierten Ausgestaltung.

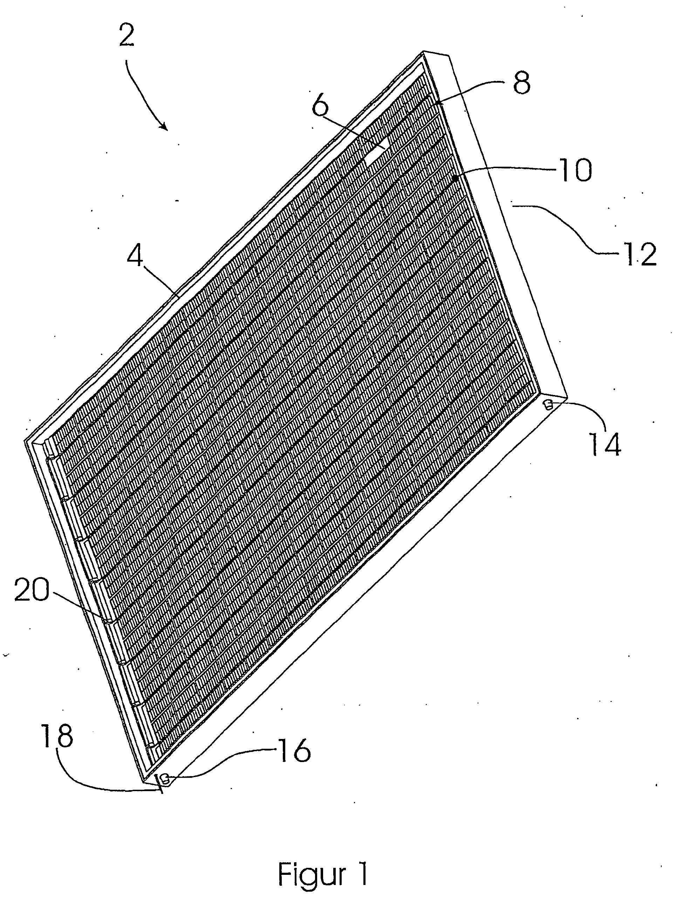

In der perspektivischen Ansicht in Fig. 1 ist mit dem Bezugszeichen 2 schematisch eine Solaranlage bezeichnet, die von einem Kasten 4 aufgenommen ist. Bei diesem Kasten 4 handelt es sich um einen Rahmen mit einem Boden, so dass die Solaranlage 2 gegen äußere Einflüsse geschützt aufgenommen werden kann. Ferner kann die von dem Kasten 4 aufgenommene Solaranlage 2 zu einer Einheit montiert und in Gebrauch genommen werden. Um das Gesamtgewicht der Anlage gering zu halten, besteht der Rahmen 4 aus insbesondere leichten und vorzugsweise robusten Materialien. Hierzu kommen ebenso Kunststoffe wie metallische Werkstoffe in Frage.

Um die von der Sonne emittierten Sonnenstrahlen einfangen zu können, besteht die Solaranlage 2 aus einer Vielzahl von Solarzellen 6. Eine solche Solarzelle 6 ist in Figur 1 beispielhaft hervorgehoben. Bei den Solarzellen 6 handelt es sich um Dünnschichtsolarzellen aus vorzugsweise amorphem Silizium, das auf einem Glassubstrat abgeschieden ist. Jede Zelle liefert bei Sonnenbestrahlung eine spezifische Spannung.

Da in der Regel die elektrische Spannung einer Solarzelle nicht ausreicht, um in der Praxis sinnvoll eingesetzt werden zu können, wird eine Vielzahl von Photovoltaikzellen 6 zu einem Solarzellenstreifen 8 verschalten. Damit die Ausgangsspannung erhöht wird, sind die einzelnen Solarzellen 6 jeweils mit dergleichen Orientierung auf dem Solarzellenstreifen angeordnet, so dass eine elektrische Reihenschaltung realisiert werden kann. Die Reihenschaltung der einzelnen Solarzellen 6 wird derart realisiert, dass jeweils der Pluspol einer Zelle 6 mit dem Minuspol der nachfolgenden Zelle 6 elektrisch leitend verbunden wird. Dadurch wird die Spannung der Solaranlage 2 erhöht und den entsprechenden Anforderungen angepasst.

Fig. 1 zeigt weiter, wie zwei aus in Reihe geschalteten Solarzellen 6 bestehende Solarzellenstreifen 8 miteinander verbunden werden, um die nächst größere Einheit, ein Baugruppen-Modul 10, zu bilden. Die zwei Solarzellenstreifen 8 sind parallel und um 180 Grad um die Hochachse verdreht zueinander angeordnet. Auf diese Weise können sie wie die einzelnen Solarzellen 6 miteinander in Reihe geschalten werden.

Die Baugruppen-Module 10 selbst sind auch parallel angeordnet und elektrisch parallel geschalten. In Fig. 1 ist mit dem Bezugszeichen 12 die parallele Anordnung sowie die elektrische Parallelschaltung der Vielzahl von Baugruppen-Modulen 10 dargestellt. Die Gesamtanzahl aller parallelen miteinander verbundenen Baugruppen-Module 10, das heißt die gesamte Parallelschaltung der zwölf in Figur 1 dargestellten Baugruppen-Module 10, legen die Größe des Rahmens 4 der Solaranlage 2.

Des Weiteren weist die Solaranlage 2 ein vorzugsweise aus Rohren bestehendes Leitungssystem für eine Wärmeträgerflüssigkeit auf. Diese dient einerseits zum Kühlen der Solaranlage 2, insbesondere der Photovoltaikzellen 6 der Solarstreifen 8. Eine weitere Funktion ist die Nutzung der solaren Energie, welche in der Solaranlage 2 in Form von Wärme eingefangen wird. Dabei wird das die Leitungen durchströmende Wärmeträgerfluid durch die entstehende Wärme aufgeheizt. Um einen Hitzestau zu verhindern, wird frisches kühles Fluid eingespeist und das erwärmte Fluid abtransportiert, wozu zwei Leitungen vorgesehen sind. Eine Zuleitung 14 versogt die Solaranlage 2 mit dem Wärmeträgerfluid, wobei die Zuleitung 14 an einem der beiden Enden der Solarzellenstreifen 8 angeordnet ist und im Wesentlichen senkrecht dazu verläuft. Auf der gegenüberliegenden Seite der Solarzellenstreifen 8 ist eine weitere Rohrleitung, die Ableitung 16, im Wesentlichen parallel zur Zuleitung 14 angeordnet.

Nach Figur 1 befinden sich sowohl die Zuleitung 14 als auch die Ableitung 16 in den Rahmen 4 auf dergleichen Seite der Solaranlage 2.

Somit ist in dem Kasten 4 der Solaranlage 2 sowohl eine Zuleitung 14, als auch eine Ableitung 16 als gemeinsames Rohr für die Baugruppen-Module 10 vorgesehen.

Um die Parallelschaltung 12 der Baugruppen-Module 10 realisieren zu können, ist eine Stromabfuhrleitung 18 innerhalb des Kastens 4 vorgesehen. Sämtliche Baugruppen-Module 10 der Solaranlage 2 sind vorzugsweise auf der gleichen Seite mit der Stromleitung 18 verbunden, damit die in der Solaranlage 2 erzeugte elektrische Leitung auf einfache Weise aus der Solaranlage herausgeführt und abgegriffen werden kann. Bei der elektrischen Stromabfuhrleitung 18 handelt es sich genauer gesagt um zwei separate Leitungen, wobei mit der einen alle Pluspole verbunden sind, und mit der anderen alle Minuspole der Baugruppen-Module 10 verbunden sind. Um für die Montage der Baugruppen-Module 10 mit der Stromabfuhrleitung 18 ein einfaches Verbinden zu ermöglichen, befindet sich an der Stromabfuhrleitung 18 ein Steckersystem 20, über welches die Verbindung aller Module 10 mit der gemeinsamen Stromabfuhrleitung 18 erzeugt wird. Ferner kann mit diesen Steckverbindungen 20 zwischen den Baugruppen-Modulen 10 und der Stromabfuhrleitung 18 auf einfache Weise ein möglicherweise defekter Bereich der Solaranlage 2 ausgetauscht werden. Zusätzlich wird durch das Stecksystem 20 ein elektrischer Kurzschluss vermieden.

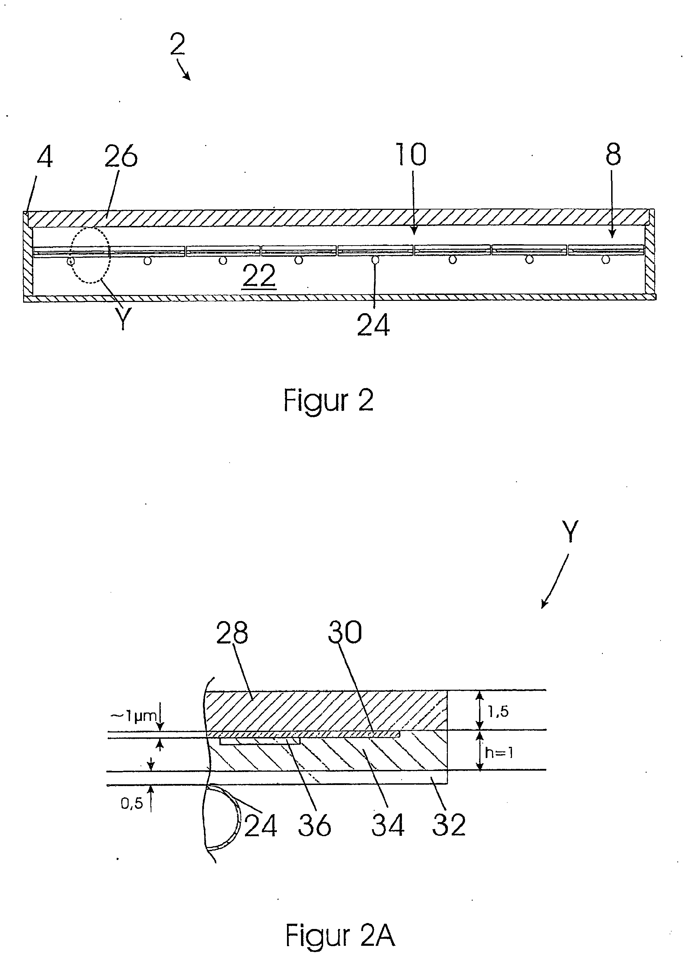

In Fig. 2 ist eine Querschnittsansicht der in Fig. 1 dargestellten Solaranlage 2 gezeigt, die beispielhaft vier nebeneinander angeordnete Baugruppen-Module 10 zeigt, wobei jedes Baugruppen-Modul 10 aus jeweils zwei Solarzellenstreifen 8 zusammengesetzt ist. Eine Untereinheit der Solaranlage 2 setzt sich also aus der Parallelschaltung 12 der Baugruppen-Module 10 zusammen, bei der sowohl die Wärmetauscherrohre 24 parallel verlaufen als auch die Solarzellenstreifen 8 über die Steckersysteme 20 mit den Stromabfuhrleitungen 18 in Parallelschaltung verbunden sind.

Die Untereinheit wird in den Rahmen 4 eingelegt und vollständig davon aufgenommen und kommt an ihrer Unterseite auf einer Dämmung 22 zum Erliegen. Der Boden vom Kasten 4 ist vorzugsweise vollständig mit dem Dämmmaterial 22 ausgelegt, so dass die Solarzellenstreifen 8 über die Wärmetauscherrohre 24 auf der Dämmung 22 liegen. Das Dämmmaterial 22 hat sowohl die Funktion, die Solaranlage 2 nach unten hin zu isolieren, als auch die Funktion, sämtliche Module 10 der Solaranlage 2 sicher aufzunehmen.

Wie durch Kreise an der Unterseite der Solarzellenstreifen 8 in Fig. 2 dargestellt, weisen diese jeweils ein Wärmetauscherrohr 24 auf, das in Längsrichtung der Solarzellenstreifen 8 mit diesen verbunden ist. Dabei ist wichtig, dass der Wärmetransport von den Solarzellen 6 über den Absorber 32 zur Wärmeträgerflüssigkeit in den Wärmetauscherrohren 24 möglichst ungehindert stattfinden kann. Daher erfolgt das Fügen an den Absorber 32 vorzugsweise über eine Schweißverbindung, wobei ebenso eine formschlüssige Verbindung den Anforderungen gerecht wird.

Auf der Oberseite des Kastens 4 ist ein Frontglas 26 angebracht. Dieses ist vom Rahmen 4 aufgenommen und dient zum Schutz der Solaranlage 2 gegen äußere Einflüsse wie Wind, Regen, Hagel und ähnliches sowie zum Schutz vor Verschmutzung, wobei es die Sonnenstrahlungen ungehindert auf die Solarzellen 6 scheinen lassen soll.

Eine Detailansicht Y des Querschnitts eines Solarzellenstreifens 8 bzw. einer Solarzelle 6 ist in Fig. 2A dargestellt. Diese vergrößerte Darstellung zeigt deutlich die verschiedenen Schichten eines Hybridsolarkollektors sowie deren Anordnung. Bei der obersten Schicht handelt es sich dabei um eine Tragschicht 28. Die Tragschicht 28 hat eine Dicke von ca. 1,5mm und dient als Substrat für eine Dünnschicht 30, die auf der Unterseite des Glassubstrats 30 abgeschieden ist. Bei der Dünnschicht 30 handelt es sich um amorphes Silizium als Halbleitermaterial, das in einem mehrstufigen Beschichtungsverfahren direkt auf das Glassubstrat 30 abgeschieden wird. Bei amorphem Alpha-Silizium (α-Si) liegt die Schichtdicke im Bereich von 0,5 bis 2,5 µm.

Es ist ferner aus Fig. 2A zu entnehmen, dass sich die Dünnschicht 30 nicht über die gesamte Breite der Tragschicht 28 erstreckt, sondern einen Randbereich freilässt. Die Glastragschicht 28 sowie die photovoltaische Dünnschicht 30 werden als Einheit mit einer Absorber-Komponente 32 (nachfolgend Absorber genannt) verbunden. Mittels einer EVA-Folie 34 (Ethylenvinylacetat) wird die Tragschicht 28 über die Dünnschicht 30 mit dem Absorber 32 verbunden. In entsprechend großen "Backöfen", in denen die Solarmodule erhitzt werden, so dass die EVA-Folie zu einer transparenten Kunststoffmasse zerschmelzen kann, wird die Tragschicht 28 über die Dünnschicht 30 mittels der EVA-Folie 34 mit dem Absorber 32 zusammenlaminiert.

Die Hauptaufgaben der EVA-Folie 34 bestehen zum einen darin, dass die Photovoltaikkomponente 30 gegenüber dem Absorber 32 isoliert wird. Insbesondere muss diese Folie 34 einem vorgeschriebenen Durchschlagtest mit bis zu 1000 Volt standhalten. Im Falle von EVA-Folie 34 als Zwischenschicht ist bereits eine Schichtdicke 35 von h=1 mm ausreichend, um der oben genannten Anforderung gerecht zu werden. Ebenso zielführend ist eine PVB-Schicht (Polyvinylbutyral) als Zwischenschicht, jedoch muss hier die Schichthöhe 35 um einige Millimeter erhöht werden. Eine weitere Aufgabe dieser Zwischenschicht 34 ist, eine sichere Verbindung zwischen dem Absorber 32 und der Photovoltaikkomponente 30 zu gewährleisten.

Insbesondere muss die Laminierfolie 34 die unterschiedlichen Wärmeausdehnungen der Komponenten oberhalb sowie unterhalb der Folie 34 aufgrund unterschiedlicher Längenausdehnungskoeffizienten ausgleichen, um somit wärmebedingte Spannungen abzubauen beziehungsweise zu verhindern.

Bei der Verwendung von EVA-Folie 34 als Bindekomponente zwischen dem Absorber 32 und der Dünnschicht 30 kommen besonders die guten thermischen Eigenschaften zu tragen, da diese eine gute Wärmeleitfähigkeit besitzt.

Aus der Darstellung gemäß Fig. 2A ist noch zu erkennen, dass die Absorberkomponente 32 ein ca. 0,5mm starkes Blech ist und in direktem Kontakt mit dem Wärmtauscherrohr 24 steht. Dieses ist bevorzugt an die Unterseite des Absorbers 32 aufgeschweißt, um einen möglichst guten Wärmeübergang zu gewährleisten. Üblicherweise ist der Solarzellenstreifen 8 mit jeweils einem dünnwandigen Wärmetauscherrohr 24 gepaart, wobei durchaus mehrere Wärmetauscherrohre 24 je Solarzellenstreifen 8 denkbar sind. Es ist ebenso möglich, den Durchmesser der Wärmetauscherrohre 24 entsprechend der erwarteten Betriebstemperaturen der Solaranlage 2 zu variieren.

Ferner zeigt die Darstellung in Fig. 2A, dass direkt an der Unterseite der Dünnschicht 30 ein Stromband 36 vorgesehen ist, um die jeweilige Solarzelle 6 mit der benachbarten Solarzelle 6 zu verbinden. Auf diese Weise wird eine Reihenschaltung innerhalb eines Solarzellenstreifens 8 realisiert. Diese elektrische Kopplung der einzelnen Solarzellen 6 eines Solarzellenstreifens 8 dienen zur Einstellung der gewünschten Spannung der Solaranlage 2.

Aus Fig. 2A in Zusammenschau mit Fig. 2 wird deutlich, dass der Absorber 32, der mit der Tragschicht 28 über die Dünnschicht 30 mittels der EVA-Folie 34 verbunden sind, samt der an der Unterseite der Absorber 32 befindlichen Wärmetauscherrohre 24 als komplette Einheit in den Kasten 4 eingelegt werden. Ferner ist in Zusammenschau mit Fig. 1 zu sehen, dass das Zuflussrohr 14, das Abflussrohr 16 und die Wärmetauscherrohre 24 zu einer Rohrharfe als Leitungssystem der Solaranlage 2 miteinander verbunden sind und diese mit dem Wärmeträgerfluid versorgen.

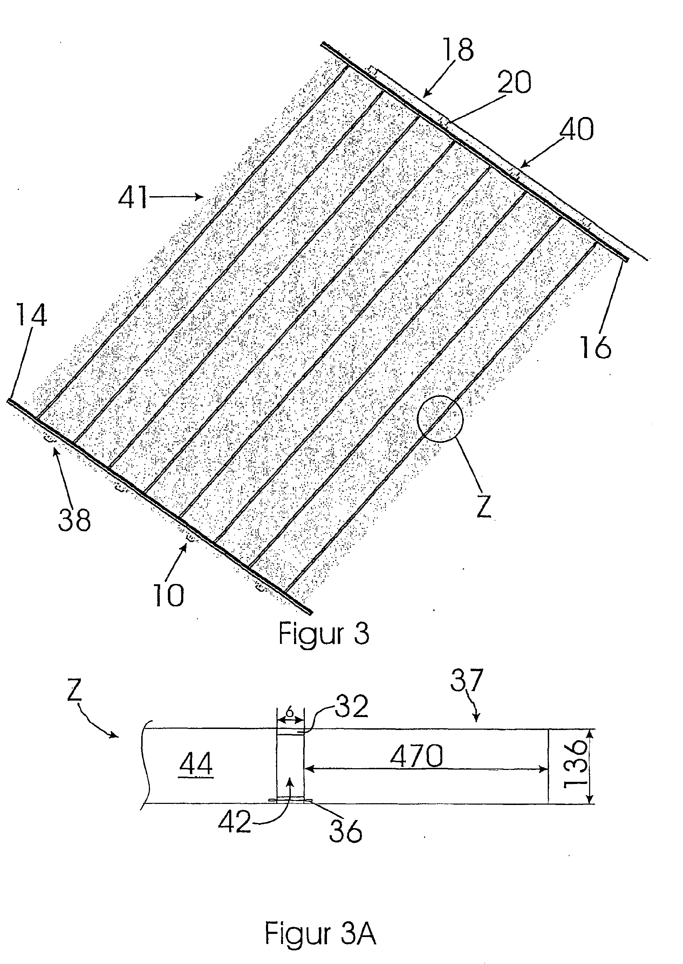

Fig. 3 ist eine schematische perspektivische Rückansicht der in Fig. 1 dargestellten Solaranlage 2, die unter anderem die einzelnen Segmente 41 der Solarzellenstreifen 8 zeigt. Es ist erkennbar, dass die Solaranlage 2 modular konstruiert bzw. aufgebaut ist. Das heißt, dass eine beliebige Anzahl von parallel zueinander liegenden Baugruppen-Modulen 10 zu einer Einheit verbunden werden können. Die elektrische Kopplung erfolgt mittels der bereits dargestellten Steckersysteme 20, mit deren Hilfe eine Vielzahl von Baugruppen-Modulen 10 an die Stromabfuhrleitungen 18 angeschlossen werden kann. Die durchgängig ebenen Absorber 32 sind jeweils mit einem Wärmetauscherrohr 24 verbunden, wobei jedes dieser Wärmetauscherrohre 24 an seinen beiden gegenüberliegenden Enden mit dem Zuflussrohr 14 und der Ableitung 16 verbunden ist. Die Zuleitung 14 und die Ableitung 16 bilden zusammen mit der Vielzahl der Wärmetauscherrohre 24 die Rohrharfe, die komplett vom Wärmeträgerfluid durchströmt wird und somit zur Kühlung der Solaranlage 2 dient.

Mit dem Bezugszeichen 38 ist in Fig. 3 die elektrische Reihenschaltung zweier Solarzellenstreifen 8 dargestellt. Dabei wird der Pluspol der entsprechenden Solarzelle 6 des einen Solarzellenstreifens 8 mit dem Minuspol der Solarzelle 6 des weiteren Solarzellenstreifens 8 verbunden. Dazu liegen die beiden Solarzellenstreifen 8, die ein Baugruppen-Modul 10 bilden, um 180 Grad verdreht und parallel nebeneinander.

Auf der gegenüberliegenden Seite der Glasstreifen 8 befinden sich die Verbindungsstellen 40 zur Parallelschaltung der Baugruppen-Module 10 der Solaranlage 2. Jedes Baugruppen-Modul 10 wird dabei über das Steckersystem 20 mit den Stromabfuhrleitungen 18 verbunden, wodurch sich die Stromstärken addieren und die Spannung konstant bleibt.

Fig. 3A ist eine vergrößerte Darstellung der Detailansicht Z aus Fig. 3.

Diese Detailansicht ist eine Draufsicht auf den Bereich eines Solarstellenstreifens 8 mit zwei Solarzellen 6 und einem Zwischenabstand. Die zwei gezeigten Solarzellen 6, welche jeweils ein Segment 44 der Tragschicht 28 darstellen, sind mit einer Beabstandung von 6mm zueinander aneinander gereiht. Im Zwischenabstand der beiden Segmente 44 ist der Absorber 32 zu sehen. Wie in Fig. 3A dargestellt, ist das vorzugsweise 0,5mm dicke Absorberblech 32 im Bereich des Zwischenabstandes zwischen zwei benachbarten Solarzellen 6 mit einer Querausstanzung 42 versehen. Diese Ausklinkung 42, die insbesondere dafür vorgesehen ist, um das Absorberblech 32 daran zu hindern, sich aufgrund von Wärmedehnungen zu verbiegen, dient sowohl als Pufferbereich, in den sich das Absorberblech 32 ausdehnen kann, als auch als eine Art Sollbiegestelle, an der sich das Absorberblech 32 verformen kann, ohne dass die Glasplattensegmente 44 der Tragschicht 28 in Mitleidenschaft gezogen werden.

Die Solarstreifenzellen 8 bestehen jeweils aus einer Vielzahl von Glassegmenten 44, die jeweils das Substrat 28 für die Dünnschicht darstellen. Sie haben einen Rechteckgrundriss 37 mit den Seitenlängen 136mm und 470mm. Die rechteckigen Glasplatten 44, die in ihrer Gesamtheit die Tragschicht 28 der Solarzellenstreifen 8 bilden, sind ebenfalls miteinander elektrisch in Reihe geschalten. Um die Ausstanzungen 42 zu überbrücken, werden daher benachbarte Tragschichtsegmente 44 in Längsrichtung des Absorbers 32 über Strombänder 36 elektrisch miteinander verbunden.

Somit sind die einzelnen Solarzellen 6 ebenso wie die Segmente 44 sowie die Solarzellenstreifen 8 in Reihenschaltung miteinander verbunden, wobei diese die Baugruppen-Module 10 bilden, welche wiederum mit einer Vielzahl weiterer Baugruppen-Module 10 über die Steckersysteme 20 mit der Stromabfuhrleitung 18 in Parallelschaltung verbunden sind.

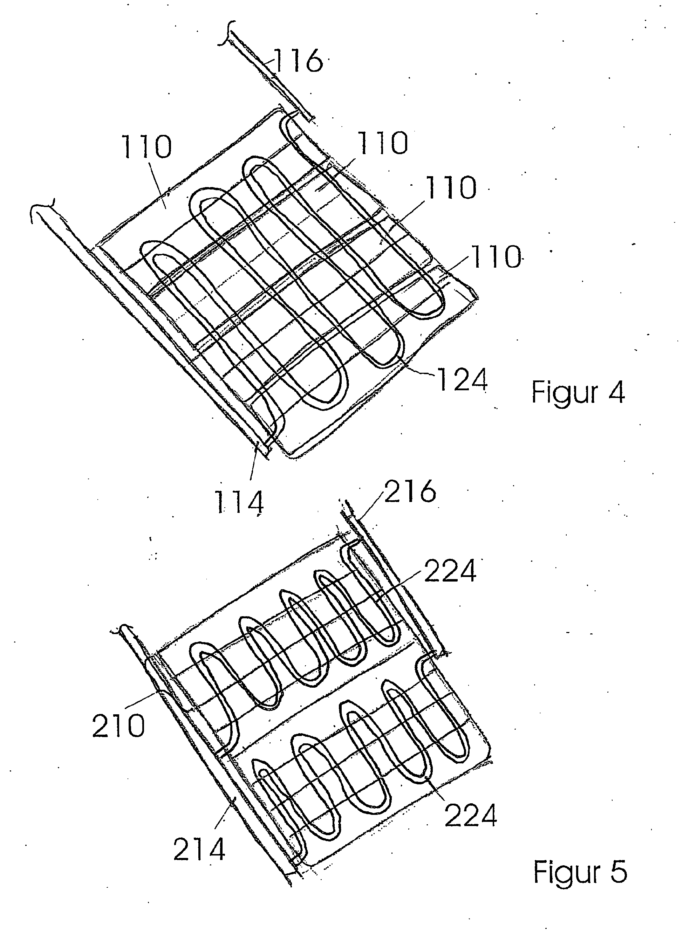

In den Figuren 4 und 5 sind weitere Ausführungsformen der Solaranlage schematisch gezeigt. Diejenigen Komponenten, die den Bauteilen der zuvor beschriebenen Ausführungsform entsprechen, sind dabei mit ähnlichen Bezugszeichen versehen, denen eine "1" bzw. "2" vorangestellt ist.

Bei der Ausführungsform nach Figur 4 wird anstelle des Aufbaus nach Art eines Rohrharfenkollektors der Aufbau nach Art eines Mäanderkollektors gewählt. D. h., es erstreckt sich zwischen der Zuleitung 114 und der Ableitung 116 ein einziges Wärmetauscherrohr 124, wodurch Strömungsverluste minimiert werden können, was bei größeren Anlagen von Vorteil sein kann.

Bei der Ausführungsform nach Figur 5 wird die Bauart nach Art eines Rohrharfenkollektors mit der nach Art eines Mäanderkollektors kombiniert. D.h., ein schlangenförmiges Wärmetauscherrohr 224 erstreckt sich unterhalb mehrerer benachbarter Solarzellenstreifen 208 bzw. mehrerer Baugruppen-Module 210, und mehrere schlangenförmige Wärmetauscherrohre 224 sind parallel geschaltet.

Die schlangenförmig geformten Wärmetauscherrohre sind an der Unterseite des Absorbers mit diesem verschweißt bzw. verlötet.

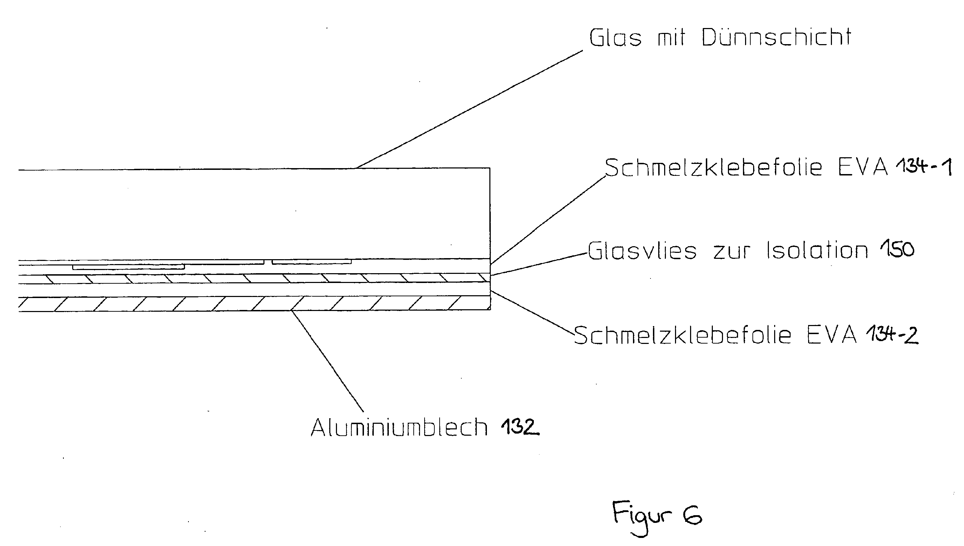

In Figur 6 ist der Schichtaufbau eines Absorberbleches in einer modifizierten Form zu sehen. Zur Vereinfachung der Beschreibung sind diejenigen Komponenten, die den Bestandteilen der vorher beschriebenen Ausführungsform entsprechen, mit ähnlichen Bezugszeichen versehen, denen eine "1" vorangestellt ist. Die Besonderheit dieser Variante, die als selbständige Erfindung anzusehen ist und für die selbständiger Schutz beansprucht wird, besteht darin, dass in die aus zwei Schmelzklebefolien 134-1 und 134-2 aufgebaute Klebeschicht zur Verbesserung der elektrischen Isolation des Dünnschichtmoduls 128 zum Aluminiumblech 132 ein herkömmliches bzw. handelsübliches Glasvlies 150 als Zwischenlage eingesetzt wird.

Das Glasvlies 150 wird zwischen die beiden dünnen Schmelzklebefolien 134-1 und 134-2 gelegt. Dadurch wird verhindert, dass die Stromabführbahnen 136 der Dünnschicht einen Kurzschluss zum Aluminiumblech 132 verursachen.

Man erkennt aus der Darstellung nach Figur 6, dass die Dicke d150 des Glasvlieses 150 nur einen Bruchteil, insbesondere nur 5 bis 35% der Dicke d134 der von den beiden Schmelzklebefolien 134-1 und 134-2 gebildeten Klebeschicht ausmacht. Im gezeigten Beispiel wird das Glasvlies 150 von einer herkömmlichen Glasvliesmatte mit einer Dicke von 0,36 mm und einem Flächengewicht von 20g/m₂ hergestellt. Die Glasfasern sind zufällig angeordnet. Die Dicke der Schmelzklebefolie 134-1 bzw. 134-2 beträgt beispielsweise jeweils etwa 0,7 mm. Damit ergibt sich ein Verhältnis der Dicke des Glasvlieses 150 zur Gesamtdicke der Schmelzklebefolie von 0,36 mm : 1,4 mm.

Selbstverständlich sind Abweichungen zu dem zuvor beschriebenen Ausführungsbeispiel möglich, ohne den Grundgedanken der Erfindung zu verlassen.

So ist es gleichermaßen möglich, dass für die Herstellung der Dünnschicht-Solarmodule anstelle von amorphem Silizium das Halbleitermaterial Cadmiumtellurid (CdTe) beziehungsweise eine Kombination der Elemente Kupfer, Indium, Gallium Schwefel (CIGS) als Halbleiter verwendet wird.

Es ist selbstverständlich auch möglich, dass sich die in Fig. 1 dargestellten Zuund Ableitungen nicht auf der gleichen Seite des Solaranlagenkastens befinden. Ebenso kann sich auf der einen Seite der Anschluss für die Zuleitung befinden und auf der gegenüberliegenden Seite des Rahmens der Anschluss für die Ableitung des gemeinsamen Ableitungsrohrs der Rohrharfe.

Ebenso können die Zuleitungen und/oder Ableitungen an den beiden anderen einander gegenüberliegenden Seiten der rechteckigen Solaranlage vorgesehen sein. Ferner ist es denkbar, dass die Solaranlage mit einer Vielzahl von Zuleitungen beziehungsweise Ableitungen ausgestattet ist.

Verschiedenste Medien können zum Abtransport der Wärme als Wärmeträgerflüssigkeit verwendet werden. Flüssigkeiten wie Wasser kommen ebenso in Frage wie beispielsweise geeignete Gase oder heat pipes.

Abgesehen davon, dass das Frontglas der Solaranlage aus Glas, Plexiglas oder einem beliebigen geeigneten Kunststoff oder mineralischen Glas sein kann, kann es ebenso weggelassen werden.

Auch die Anzahl der Solarzellenstreifen und damit der Baugruppen-Module ist nicht auf die in Fig. 2 dargestellte Anzahl von acht Glasstreifen beziehungsweise vier Baugruppenmodulen beschränkt, sondern kann auf eine beliebige Anzahl vergrößert beziehungsweise verkleinert werden. Gleiches gilt für die Solarglasstreifen selbst, deren Länge je nach Bedarf den relevanten Anforderungen angepasst werden kann.

Selbstverständlich ist der in Fig. 2 dargestellte Hybridsolarkollektor bezüglich der Wärmetauscherrohre nicht nur auf die dargestellte Ausführungsform beschränkt. Jeder Solarzellenstreifen kann ebenso mit mehr als einem Wärmetauscherrohr in Kontakt stehen, um auf diese Weise den Wärmeaustausch zwischen den Absorberblechen und den Wärmetauscherrohren zu erhöhen.

Genauso können mehrere Wärmetauscherrohe an den Absorberblechen in Kombination mit den Ableitungen und Zuleitungen so angeordnet sein, dass die Strömungsrichtungen alternierend entgegen gesetzt verlaufen.

Gleichermaßen ist die vorliegende Erfindung nicht darauf beschränkt, dass die Wärmetauscherrohre mit den Absorberblechen verschweißt sind. Ebenso kann jedes andere Fügeverfahren wie Kleben, Löten oder ein anderes kraftschlüssiges Verfahren in Frage kommen.

Anstelle von runden Wärmetauscherrohren können diese in jeder anderen beliebigen Form ausgeführt sein. So ist es beispielsweise möglich, dass bei einem Querschnitt von mindestens einer geraden Kante der Wärmetauscherrohre die Kontaktfläche zum Absorberblech und damit der Wärmeübergang in das Kühlmedium beziehungsweise Wärmeträgermedium deutlich erhöht wird.

Verschiedenste Materialien kommen sowohl für das Absorberblech als auch für die Wärmetauscherrohre beziehungsweise Wärmetauscherleitungen in Frage. Werkstoffe mit guter Wärmeleitfähigkeit wie beispielsweise Kupfer, Aluminium und andere metallische Werkstoffe sind für Anwendung als Absorberblech und Wärmetauscherleitung ebenso sinnvoll wie beliebige andere nichtmetallische oder Werkstoffe oder Polymere mit guter thermischer Leitfähigkeit.

Zusätzlich können Absorberbleche vor dem Laminieren mit einem elektrisch nicht leitenden Lack behandelt werden.

Die Isolierung der Solaranlage kann ebenso mittels einer Dämmwolle, eines Kunststoffes oder eines Gases realisiert werden.

Anstelle der in Fig. 2A dargestellten Schichtdicken des Hybridkollektors sind ebenso andere Verhältnisse beziehungsweise Schichtdicken möglich. Je nach Verwendungszweck und/oder Einsatzort der Solaranlage ändert sich die Dicke der schützenden Tragschicht der Dünnschicht. Insbesondere bei Solaranlagen, die auf ein schützendes Frontglas verzichten, kann die Glasschicht dicker und damit stabiler ausgeführt sein. In gleicher Weise ist die Wahl des Werkstoffes der Tragschicht abhängig davon, welchen äußeren Einflüssen die Solaranlage ausgesetzt ist und welche weiteren Schutzmaßnahmen vorgesehen sind. So kommen Metallfolien ebenso wie temperaturbeständige Polymere in Frage.

Während die in Figur 2A dargestellte Halbleiterdünnschicht eine Dicke von ca. 0,5 bis 2 µm aufweist, kann diese bei Verwendung von anderen Materialien deutlich davon abweichen.

Die Dicke der Dünnschicht beträgt bei Verwendung des Halbleitermaterials Kupfer-Indium-Diselenid ca. 8 µm während sie bei Cadmiumtellurid ca. 10 µm beträgt.

Ferner ist es möglich, dass die Segmente der Tragschicht nicht mittels einer EVA-Folie über die Dünnschicht mit dem Absorber verbunden sind, sondern dass eine PVB-Folie zum Laminieren verwendet wird. Da der spezifische elektrische Widerstand einer EVA-Folie um ein vielfaches höher ist als die einer PVB-Folie, wird somit eine größere Schichtdicke für die Laminierschicht notwendig.

Selbstverständlich kann die Anzahl der Querausstanzungen in den Absorberblechen der Solarzellenstreifen variiert werden. Ebenso ist es möglich, dass diese nicht gleichmäßig sondern in Clustern am Absorber verteilt sind. Ferner ist es denkbar, dass solche eine durch eine Querausstanzung realisierte Sollschwachstelle des Absorberblechs durch eine Vielzahl kleinerer Ausstanzungen realisiert wird. Dabei kann sowohl die Vielzahl kleinerer Austanzungen als auch die große Querausstanzung sowohl eckig als auch abgerundet realisiert sein.

Die Solarzellen der Solaranlage können durch verschiedenste Fügetechniken miteinander verbunden werden. Kleben, Löten, Bonding oder Schweißen ist ebenso denkbar, wie beispielsweise einfaches Klemmen oder Ineinanderschieben.

Die Erfindung schafft somit eine Vorrichtung zur direkten Umwandlung von Sonnenenergie in elektrische Energie, in dem die von der Sonne emittierten Sonnenstrahlen auf die geeignete Halbleiter-Dünnschicht der Hybridsolarkollektoren treffen. In der vorliegenden Erfindung kommt vorzugsweise amorphes Silizium als Halbleitermaterial zur Anwendung, jedoch sind ebenso Materialien wie CdTe oder CIGS üblich. Abgeschieden wird die Silizium-Dünnschicht auf Tragschichtsegmenten, die aus Kostengründen bevorzugt aus Glas sind.

Da sich die Längenausdehnungskoeffizienten von Glas und Silizium nicht sehr stark unterscheiden, kann das Silizium aus Sicht der Wärmedehnung bedenkenlos direkt auf Glasplatten abgeschieden werden. Diese werden in Reihenschaltung miteinander verbunden und bilden den Hybrid-Kollektor, welcher mit einem weiteren Hybrid-Kollektor in Parallelschaltung verbunden ist und somit das Baugruppen-Modul bildet. Somit entsteht ein Baugruppen-Modul, das aus zwei in Reihe geschalteten Glasstreifen besteht, die wiederum jeweils aus vier Tragschicht-Segmenten bestehen, die ebenfalls elektrisch in Reihe geschalten schalten.

Anders ist dies an der Grenzschicht zwischen Dünnschicht und dem meist metallischen Absorber, der aus Aluminium oder Kupfer besteht. Diese Werkstoffe könnten zwar bei Beschichtung ebenfalls in direktem Kontakt mit der Dünnschicht stehen, jedoch unterscheiden sich die jeweiligen Wärmeausdehnungskoeffizienten erheblich.

Dieses Problem wird in der vorliegenden Erfindung derart gelöst, indem das Substrat über die Dünnschicht mittels einer EVA-Schmelzklebefolie mit dem Absorberblech zusammenlaminiert wird. Die Zwischenfolie ist aufgrund des hohen spezifischen elektrischen Widerstandes gut als Isolator geeignet und für die Anwendung in Solarzellen besonders vorteilhaft, da es auch eine gute thermische Leitfähigkeit aufweist. Somit werden Spannungen, die aufgrund unterschiedlicher Wärmeausdehnungskoeffizienten in dem Sandwich zwischen Glasplatte und Absorberblech auftreten, zumindest teilweise von der Zwischenschicht absorbiert.

Eine weitere Einrichtung zum Abbauen von Spannungen sind Ausstanzungen, die in regelmäßigen Abständen im Absorber eingebracht sind. Diese Queraustanzungen unterteilen den durchgängig ebenen Absorber in vier gleichgroße Bereiche mit Rechteckgrundriss. Mit Hilfe dieser Ausklinkungen im Absorberblech kann dieses selbst wärmeinduzierte Spannungen abbauen, indem es sich ausdehnen kann.

Ausklinkungen im Absorberblech verhindern ebenso, dass es sich unkontrolliert Verbiegen kann, was wiederum dazu führen kann, dass die Tragschichtplatten brechen, da Glas als spröder Werkstoff quasi keine Verformungen zulässt. Indem die Zwischenabstände der Glassegmente mit den Queraustanzungen des Absorbers zusammenfallen, fungieren diese Bereiche der Solarzellenstreifen als Sollbiegestellen, mit Hilfe derer der Hybrid-Kollektor gezielt und kontrolliert Wärmespannungen ohne Beschädigung der Anlage abbauen kann.

Ebenso ist die Vorrichtung in der Lage, die in der Solaranlage entstehende Wärmeenergie zu Nutzen und auf diese Weise den Gesamtwirkungsgrad der Anlage zu erhöhen. Dazu sind Wärmetauscherrohre in Längsrichtung der Absorberbleche an deren Unterseite aufgeschweißt, die von der Wärmeträgerflüssigkeit durchströmt werden. Alle Wärmetauscherrohre verlaufen über die gesamte Länge der Solarzellenstreifen und sind an beiden Enden jeweils mit anderen Rohren verbunden, wobei eines davon eine Zuleitung und das andere eine Ableitung des Wärmeträgerfluids darstellt. Die damit gebildete Rohrharfe erfüllt einerseits die Funktion des Kühlens der Solaranlage durch Abtransport der entstehenden Wärme. Andererseits wird diese Wärme des Hybrid-Kollektors beispielsweise zum Erwärmen von Trinkwasser oder zum Heizen verwendet.

Durch Einbetten der Absorberbleche mit deren Unterseite, an der die Wärmetauscherrohre angebracht sind, auf einem Isolator wie Dämmwolle werden die Solarzellen gelagert und nach unten isoliert, so dass möglichst viel Wärme genutzt werden kann.

Zum Schutz gegen äußere Einflüsse wird die Vielzahl von Baugruppen-Modulen von einem Kasten aufgenommen, dessen Boden mit Dämmmaterial ausgelegt ist und dessen Oberseite mit einem Frontglas abgedeckt wird.

## Patentansprüche

1. Hybrid-Kollektor mit flächiger Absorber-Komponente (32) und Dünnschicht-Photovoltaik-Komponente (30), die auf einer Tragschicht (28) abgeschieden ist, wobei die Absorber-Komponente (32) von einem durchgängig ebenen Absorberblech (32) gebildet ist, das bodenseitig mit zumindest einem Wärmetauscherrohr (24; 124; 224) in Kontakt steht, **dadurch gekennzeichnet, dass** die Tragschicht (28) von einer Glasplatte (44) gebildet ist und über die Dünnschicht-Photovoltaik-Komponente (30) mittels einer wärmeleitenden Klebeschicht (34) mit der Absorber-Komponente (32) verbunden ist, wobei die Klebeschicht (34) eine EVA-Schmelzklebefolie zum Isolieren und zum Ausgleichen unterschiedlicher Wärmedehnungen ist, die eine Dicke h (35) hat, die im Bereich zwischen 0,5mm und 2mm liegt.

2. Hybrid-Kollektor nach Anspruch 1, **dadurch gekennzeichnet, dass** die Tragschicht (28) von mehreren Glasplatten (44) gebildet ist, die in Längsrichtung des Wärmetauscherohres (24) mit Zwischenabständen (42) voneinander aneinander gereiht sind.

3. Hybrid-Kollektor nach Anspruch 1 oder 2, **dadurch gekennzeichnet, dass** das Absorberblech (32) einen schmalen Rechteckgrundriss (37) hat und mittels zumindest einer Querausstanzung (42) in Segmente (41) unterteilt ist.

4. Hybrid-Kollektor nach Anspruch 3, **dadurch gekennzeichnet, dass** die Ausstanzungen des Absorberblechs (32) zwischen den Glasplatten (44) liegen.

5. Hybrid-Kollektor nach einem der Ansprüche 1 bis 4, **dadurch gekennzeichnet, dass** die Klebeschicht (34) eine Wärmeleitfähigkeit im Bereich zwischen 0,2 bis 0,32 W/(m*K) hat.

6. Hybrid-Kollektor einem der Ansprüche 2 bis 5, **dadurch gekennzeichnet, dass** das Absorberblech (32) einen Rechteckgrundriss (37) mit 1,5m bis 2,5m Länge und 0,1 m bis 0,2m Breite aufweist, wobei vorzugsweise ein Glasstreifen (44) eine Breite hat, die im Wesentlichen der Breite des Absorberblechs (32) entspricht, und eine Länge, die im Wesentlichen einen ganzzahligen, vorzugsweise einen geradzahligen Bruchteil, wie z.B. ¼, der Länge des Absorberblechs (32) ausmacht.

7. Hybridkollektor, insbesondere nach einem der Ansprüche 1 bis 6, bei dem in eine zur Verbindung einer Dünnschicht-Fotovoltaik-Komponente mit einer flächigen Absorberkomponente dienende Klebeschicht (134-1, 134-2) ein Glasvlies (150) eingebettet ist.

8. Hybridkollektor nach Anspruch 7, **dadurch gekennzeichnet, dass** das Glasvlies (150) zwischen zwei dünne Schmelzklebefolien (134-1, 134-2) als Zwischenlage eingelegt ist.

9. Hybridkollektor nach Anspruch 7 oder 8, **dadurch gekennzeichnet, dass** die Dicke (d150) des Glasvlieses (150) einen Bruchteil der Dicke (d134) der Klebeschicht ausmacht.

10. Solaranlage (2) mit mindestens zwei Hybrid-Kollektoren (8) nach einem der Ansprüche 1 bis 9, wobei zwei Hybrid-Kollektoren zu einem parallel zueinander liegen und zu einem Baugruppen-Modul (10; 210) zusammengefasst sind und die jeweiligen Photovoltaik-Komponenten (6) elektrisch in Reihe und die Wärmetauscherrohre (24; 224) parallel geschaltet sind.

11. Solaranlage (2) nach einem der Ansprüche 1 bis 10, **dadurch gekennzeichnet, dass** eine Vielzahl an Baugruppen-Module (10; 110; 210) zusammengefasst ist und dass sowohl die Wärmetauscherrohre (24; 224) als auch die jeweiligen Baugruppen-Module (10; 110; 210) elektrisch parallel geschaltet sind.

12. Solaranlage (2) nach Anspruch 10 oder 11, **gekennzeichnet durch** einen Rahmen, in dem bodenseitig eine Isolierschicht (22) liegt, welche das Absorberblech (32) trägt und in der die Wärmetauscherroher (24; 124; 224) eingebettet sind.

## Claims

1. Hybrid collector having a planar absorber component (32) and thin-layer photovoltaic component (30) which is deposited on a carrier layer (28), the absorber component (32) being formed by a continuously planar absorber plate (32) which is in contact at the base side with at least one heat exchange pipe (24; 124; 224), **characterised in that** the carrier layer (28) is formed by a glass plate (44) and is connected to the absorber component (32) via the thin-layer photovoltaic component (30) by means of a thermally conductive adhesive layer (34), wherein the adhesive layer (34) is an EVA melt adhesive film for insulating and compensating for different thermal expansions, which film has a thickness h (35) which is in the range between 0.5 mm and 2 mm.

2. Hybrid collector according to claim 1, **characterised in that** the carrier layer (28) is formed by a plurality of glass plates (44) which are arranged in rows beside each other in the longitudinal direction of the heat exchange pipe (24) with intermediate spacing (42) from each other.

3. Hybrid collector according to claim 1 or claim 2, **characterised in that** the absorber plate (32) has a narrow, rectangular horizontal projection (37) and is subdivided into segments (41) by means of at least one transverse punched portion (42).

4. Hybrid collector according to claim 3, **characterised in that** the punched portions of the absorber plate (32) are located between the glass plates (44).

5. Hybrid collector according to any one of claims 1 to 4, **characterised in that** the adhesive layer (34) has a thermal conductivity in the range from 0.2 to 0.32 W/(m*K).

6. Hybrid collector according to any one of claims 2 to 5, **characterised in that** the absorber plate (32) has a rectangular horizontal projection (37) having a length of from 1.5 m to 2.5 m and a width of from 0.1 m to 0.2 m, a glass strip (44) preferably having a width which substantially corresponds to the width of the absorber plate (32) and a length which substantially constitutes a whole-numbered fraction, preferably an even-numbered fraction, such as, for example, ¼ of the length of the absorber plate (32).

7. Hybrid collector, in particular according to any one of claims 1 to 6, wherein a glass mat (150) is embedded in an adhesive layer (134-1, 134-2) which serves to connect a thin-layer photovoltaic component having a planar absorber component.

8. Hybrid collector according to claim 7, **characterised in that** the glass mat (150) is inserted between two thin melt adhesive films (134-1, 134-2) as an intermediate layer.

9. Hybrid collector according to claim 7 or claim 8, **characterised in that** the thickness (d150) of the glass mat (150) constitutes a fraction of the thickness (d134) of the adhesive layer.

10. Solar installation (2) having at least two hybrid collectors (8) according to any one of claims 1 to 9, wherein two hybrid collectors are located parallel with each other and are combined to form a subassembly module (10; 210) and the photovoltaic components (6) are electrically connected in series and the heat exchange pipes (24; 224) are connected in parallel.

11. Solar installation (2) according to any one of claims 1 to 10, **characterised in that** a large number of subassembly modules (10; 110; 210) are combined and **in that** the heat exchange pipes (24; 224) and the subassembly modules (10; 110; 210) are electrically connected in parallel.

12. Solar installation (2) according to claim 10 or 11, **characterised by** a frame, in which an insulating layer (22) which carries the absorber plate (32) and in which the heat exchange pipes (24; 124; 224) are embedded is located at the base side.

## Revendications

1. Collecteur hybride comprenant un composant absorbeur plat (32) et un composant photovoltaïque à couches fines (30), lesquels sont déposés sur une couche de support (28), sachant que le composant absorbeur (32) est formé par une tôle absorbeuse (32) plane en continu, qui se trouve en contact côté fond avec au moins un tube d'échangeur de chaleur (24 ; 124 ; 224), **caractérisé en ce que** la couche de support (28) est formée par un panneau de verre (44) et est reliée par l'intermédiaire du composant photovoltaïque à couches fines (30), au moyen d'une couche adhésive (34) thermoconductrice au composant absorbeur (32), sachant que la couche adhésive (34) est un film adhésif fusible à base d'EVA servant à isoler et à compenser les diverses dilatations thermiques, lequel présente une épaisseur h (35) située dans la plage comprise entre 0,5 mm et 2 mm.

2. Collecteur hybride selon la revendication 1, **caractérisé en ce que** la couche de support (28) est formée par plusieurs panneaux de verre (44), qui sont juxtaposés les uns aux autres dans la direction longitudinale du tube d'échangeur de chaleur (24), avec des espacements intermédiaires (42) entre eux.

3. Collecteur hybride selon la revendication 1 ou 2, **caractérisé en ce que** la tôle absorbeuse (32) présente une forme rectangulaire (37) étroite et est divisée en segments (41) au moyen au moins d'une découpe transversale (42).

4. Collecteur hybride selon la revendication 3, **caractérisé en ce que** les découpages de la tôle absorbeuse (32) sont situés entre les panneaux de verre (44).

5. Collecteur hybride selon l'une quelconque des revendications 1 à 4, **caractérisé en ce que** la couche adhésive (34) présente une conductivité thermique située dans la plage comprise entre 0,2 et 0,32 W/(m*K).

6. Collecteur hybride selon l'une quelconque des revendications 2 à 5, **caractérisé en ce que** la tôle absorbeuse (32) présente une forme rectangulaire (37) ayant une longueur allant de 1,5 m à 2,5 m et une largeur allant de 0,1 m à 0,2 m, sachant que de préférence une bande de verre (44) présente une largeur qui correspond essentiellement à la largeur de la tôle absorbeuse (32), et une longueur qui représente essentiellement une fraction entière, de préférence une fraction à nombre pair, telle que ¼ de la longueur de la tôle absorbeuse (32).

7. Collecteur hybride en particulier selon l'une quelconque des revendications 1 à 6, dans le cadre duquel un voile non-tissé de verre (150) est incorporé dans une couche adhésive (134-1, 134-2) servant à relier un composant photovoltaïque à couches fines à un composant absorbeur plat.

8. Collecteur hybride selon la revendication 7, **caractérisé en ce que** le voile non-tissé de verre (150) est inséré en tant que couche intermédiaire entre deux films adhésifs fusibles (134-1, 134-2) fins.

9. Collecteur hybride selon la revendication 7 ou 8, **caractérisé en ce que** l'épaisseur (d150) du voile non-tissé de verre (150) représente une fraction de l'épaisseur (d134) de la couche adhésive.

10. Installation solaire (2) équipée d'au moins deux collecteurs hybrides (8) selon l'une quelconque des revendications 1 à 9, sachant que deux collecteurs hybrides sont situés de manière parallèle l'un par rapport à l'autre et sont regroupés pour former un module d'ensembles (10 ; 210) et que les composants photovoltaïques (6) respectifs sont branchés électriquement en série et les tubes d'échangeur de chaleur (24 ; 224) sont branchés en parallèle.

11. Installation solaire (2) selon l'une quelconque des revendications 1 à 10, **caractérisée en ce qu'**une pluralité de modules d'ensembles (10 ; 110 ; 210) est regroupée, et **en ce qu'**aussi bien les tubes d'échangeur de chaleur (24 ; 224) que les modules d'ensembles (10 ; 110 ; 210) respectifs sont branchés électriquement en parallèle.

12. Installation solaire (2) selon la revendication 10 ou 11, **caractérisée par** un châssis, dans lequel se trouve une couche isolante (22), qui supporte la tôle absorbeuse (32) et dans laquelle sont incorporés les tubes d'échangeur de chaleur (24 ; 124 ; 224).
